# EUROPEAN PATENT SPECIFICATION

(11) **EP 4 670 224 B1**
(45) Date of publication and mention of the grant of the patent: **23.09.2026**
(21) Application number: 24727281.8
(22) Date of filing: 16.05.2024
(51) Int. Cl.: H01M 10/6568, H01M 10/613, H01M 10/643, H01M 10/647, H01M 10/653, H01M 10/6556, H01M 10/6557, H01M 10/6567, H01M 50/209, H01M 50/213, H01M 50/264, H05K 7/20, H01M 50/211

(54) **BATTERY MODULE WITH HEAT EXCHANGER HOUSING FOR IMMERSION COOLING**
BATTERIEMODUL MIT WÄRMETAUSCHERGEHÄUSE ZUR TAUCHKÜHLUNG
MODULE DE BATTERIE AVEC BOÎTIER D'ÉCHANGEUR DE CHALEUR POUR REFROIDISSEMENT PAR IMMERSION

(43) Date of publication of application: 31.12.2025
(73) Proprietor: Whitemark Technology GmbH, 86972 Altenstadt (DE)
(72) Inventor: MEYER, Stefan Andreas, 85221 Dachau (DE)
(74) Representative: Grünecker Patent- und Rechtsanwälte PartG mbB
(86) International application number: PCT/EP2024/063478
(87) International publication number: WO 2025/237524

(56) References cited:
- EP-A1- 3 696 876
- DE-A1- 102018 133 004
- DE-A1- 102020 124 745
- FR-A1- 3 101 731
- US-A1- 2010 021 802
- US-A1- 2014 212 722
- US-A1- 2022 102 782
- US-A1- 2023 411 732
- US-A1- 2024 128 546

## Description

The present invention relates to a battery module allowing for efficient and homogeneous tempering of battery cells.

### BACKGROUND

In view of the prospective limited availability of classical fuels and the increasing level of air pollution due to engine exhaust gases, focus has been laid on alternative drive solutions in recent years. Irrespective of the primary energy source, most approaches require battery modules and systems with a high power density, a long lifetime and high performance.

Building a battery system is the mechanical, electrical and thermal integration of a large number of battery cells into a working unit. Further aspects to consider are chemical compatibility of the used components, safety features in case of a thermal runaway and ease of mass production.

Adequate temperature control of each battery cell within a battery system is a key requirement, in particular, when charging or discharging the battery. Failure to adhere to temperature limits of, for instance, lithium-ion battery cells may lead to gradual deterioration of the battery performance or even to a rapid and dangerous destruction of the battery.

Lithium-ion batteries are the most widely used technology for energy storage due to their high energy density, low self-discharge rate and their ability to handle a large number of charge and discharge cycles. Among the different designs of lithium-ion cells, pouch and prismatic cells as well as cylindrical cells are widely used. These cells each offer specific advantages in terms of flexibility, energy density and cost efficiency, but also play a crucial role in their thermal behavior under different loads, which are measured by C-rates.

The thermal behavior of lithium-ion cells is heavily dependent on the load in the form of C rates. The C-rate indicates how quickly the battery is discharged or charged in relation to its capacity. That is, the C-rate is a measure of the rate at which a battery is discharged relative to its maximum capacity.

At low C rates, the discharge rate is lower, which leads to a slower reaction of the electrodes. This results in less heat generation in the cell. For example, when discharging at a C-rate of 0.1, the temperature increase can be minimal, about 1°C per minute. At this low load, the temperature of the cell remains relatively stable during operation. In pouch cells, flexible packaging can help to even out temperature gradients and promote even heat distribution.

At higher C-rates, the discharge rate increases, which leads to a faster reaction of the electrodes and increased heat generation. For example, when discharging at a C-rate of 3, the temperature can increase by around 5°C per minute, indicating a significant increase in heat generation. In pouch cells, this can lead to hotspots, especially if thermal management is not effective. Hotspots are areas within the cell that can overheat locally due to increased heat generation, which can damage the cell. Prismatic cells can have better heat dissipation due to their solid metal housing and are therefore better able to handle higher C-rates without becoming excessively hot. The aim for series architectures with pouch cells is therefore to use very efficient temperature management.

Effective temperature management is crucial in order to control the thermal behavior of the cells and ensure their performance and safety. This includes passive and active cooling systems as well as safety precautions such as shutdown mechanisms in the event of overheating.

Passive cooling systems use heat conducting materials and natural convection to dissipate heat. These can be implemented in the form of thermal pads or plates between the cells and heat sinks. Active cooling systems, on the other hand, use external sources such as fans or liquid cooling to actively cool the cells. These systems are more effective at controlling cell temperature, but require additional energy and resources.

In addition to the cooling systems, thermal sensors can be used to monitor temperature changes within the cell and take cooling measures if necessary. These sensors can be integrated into the battery management system to continuously monitor and control the temperature of the cells.

In addition, safety precautions such as shutdown mechanisms in the event of overheating can be implemented to protect the cell from damage. This can take the form of thermal shutdown valves or safety shutdowns that interrupt the power supply to the cell if a certain temperature limit is exceeded.

Conventionally, controlling the temperature of battery cells in a battery system may be performed indirectly, for instance, by providing a cooling body in thermal contact with base portions of cylindrical battery cells. A flow of a tempering fluid is established through channels included in the cooling body. In this way, heat generated by the battery cell is transferred via its shell into the cooling body. This setup exhibits a low thermal conductivity, leading to large temperature gradients which in turn cause accelerated aging a limit lifetime.

Alternatively, the battery cells may be cooled directly via a tempering fluid in direct thermal contact with them. For this purpose, a liquid-tight housing may be provided around the cells. By pumping the tempering fluid through said housing, heat, which is mainly transmitted through the poles of the battery cells, is transferred into the tempering fluid. This technique is known as immersion cooling and is an emerging technology still fraughted with many teething problems. In more reliable systems, the battery cells are entirely immersed in a tempering fluid.

The thermal behavior of battery cells, e.g. lithium-ion cells, e.g. cylindrical, pouch or prismatic cells, is highly dependent on the load in the form of C-rates. Low C-rates lead to lower heat generation and more stable temperatures, while high C-rates can lead to a rapid increase in cell temperature. Effective temperature management is critical to ensure cell performance and safety and requires a combination of passive and active cooling measures as well as safety precautions.

DE 10 2020 124745 A1 relates to a battery module housing with several battery cells cooled by a flow of a first coolant. The cells are located in proximity to a cooling plate through which a second coolant flows.

US 2024/128546 A1, on which the preamble of claim 1 is based, relates to a battery module with several battery cells and a housing in which coolant channels are provided in one wall.

US 2022/102782 A1 relates to a phase-change based cooling device comprising a housing whose cover exhibits cooling channels through which a cooling medium flows. The cover has further conduits through which another coolant can be sprayed into the interior of the housing. This coolant evaporates on the components to be cooled and condenses on the cover.

FR 3 101 731 A1 relates to battery module applying a phase-change based cooling approach. A housing is designed such that cylindrical battery cells are located in corresponding holders, whereby only the upper part of the battery cells is located next to a cover with coolant channels. A further coolant flows through the space upper parts of the batteries are located, evaporates, and condenses at the cover.

It is thus desirable that a battery module be provided, in which highly efficient tempering of the battery cells is facilitated, while an improved temperature homogeneity is achieved.

This is achieved by the features of the independent claims. The dependent claims describe advantageous embodiments.

### SUMMARY

The present invention relates to a battery module, comprising a housing including at least one double-walled portion, wherein a channel is integrally formed for a flow of a first tempering liquid. The battery module further comprises a second tempering liquid included in the housing; and a plurality of battery cells included in the housing and arranged in alignment with each other, wherein at least one terminal of each battery cell is located adjacent to the at least one double walled portion.

In other words, the housing may include at least one wall, which exhibits an at least partially hollow shape, thereby forming a channel, such that the first tempering liquid may be pumped through the channel. Accordingly, the wall including the channel may be tempered using the first tempering liquid. The housing may include ports for connection of the channel to an external tempering system, which may, for instance, include a pump and a heat dissipation element like an external heat exchanger.

The battery cells are arranged in the housing of the battery module such that at least one terminal of each battery cell is located adjacent to the portion of the housing including the channel for the first tempering liquid. The term "adjacent" may refers to a positional relationship between elements or components (battery cell, double-walled portion of the housing), that are positioned next to each other without intervening elements or spaces. It denotes a direct physical proximity or connection between the elements/components within a specified arrangement. In particular, when the terminals of the battery cells are adjacent to the double-walled portion of the housing, there may be no other battery cell located in between said terminals and said portion of the housing. However, it is to be noted that elements like temperature sensors, components for electric connection of the terminals, electric wires, and the like may be located in a space between the battery cells and the double-walled portion of the housing. The majority of the space in between the at least one terminal of each battery cell and the double-walled portion of the housing may be occupied by the second tempering liquid.

The second tempering liquid may be a dielectric liquid exhibiting a negligible electric conductivity and, preferably a high thermal conductivity. The second tempering liquid may be, for instance, a dielectric oil, or the like. For example, as the second tempering liquid, a 3M Novec liquid, a Shell E-Fluid, or an Obermeier Karalison oil may be used. However, the present disclosure is not limited to a specific second tempering liquid.

The first tempering liquid is not required to be exhibit a negligible electric conductivity, since it is not in direct contact with the terminals of the battery cells. The first tempering liquid may be a mixture of water and glycol, an oil, or the like.

An arrangement of a plurality of battery cells in alignment with each other may refer to an arrangement, wherein the orientation of the plurality of battery cells is substantially the same for the plurality of battery cells. For example, flat battery cells may be considered to be arranged in alignment if the battery cells are stacked along a thickness direction with at least one terminal of the battery cells extending in a same direction, which may be perpendicular to the thickness direction. For example, cylindrical battery cells may be considered to be arranged in alignment if the length/height direction of the cylindrical battery cells (i.e. the direction perpendicular to base surfaces of the cylindrical shape) is substantially the same for the plurality of battery cells.

With the setup according to the present invention, the housing acts as a heat exchanger for exchanging heat between the battery cells and the first tempering liquid, via the double-walled portion of the housing and the second tempering liquid. In particular, since the at least one terminal of each battery cell is located adjacent to the double-walled portion of the housing, and heat generated by a battery cell is usually, due to the internal structure of battery cells, transferred to the terminals of the battery cell, the heat is transferred from the battery cells to the second tempering liquid in direct vicinity of the double-walled portion. That is, the heat absorption by the second tempering liquid takes place at the same location as the heat transfer from the second temperature liquid to the first temperature liquid. In other words, the heat absorption and heat release of the second tempering liquid are not spatially separated, resulting in an improved temperature homogeneity throughout the second tempering liquid and, accordingly, the plurality of battery cells.

In an embodiment, the battery module further comprises first flow restrictor components arranged between the battery cells and portions of the housing other than the at least one double-walled portion.

The first flow restrictor components may limit the flow of the second tempering liquid within the housing to a region where the terminals of the battery cells are located. In other words, the flow of the second tempering liquid may be reduced, by the flow restrictor components, in between the battery cells and portions of the housing, which do not include a channel for the first tempering liquid.

Heat generated by battery cells is, due to their internal structure, transferred to terminal regions of the battery cells. By using the first flow restrictor components, the flow of the second tempering liquid between the battery cells and portions of the housing that do not act as a heat exchanger, is reduced, resulting in an increase of the flow of the second tempering fluid between the at least one terminal of the battery cells and the double-walled portion of the housing, which leads to an improved heat transfer from the battery cells via the second tempering liquid and the housing into the first tempering liquid.

The first flow restrictor components may be formed, for example, by a plastic, a synthetic material, or the like.

In an embodiment, each battery cell exhibits a cylindrical shape, wherein a terminal is located at each of a first base surface and a second base surface, the plurality of battery cells are arranged in a hexagonal packing arrangement, and the first base surfaces of the battery cells are located adjacent to the at least one double-walled portion.

Cylindrical battery cells may comprise a first terminal at a first base surface and a second terminal at a second base surface of the cylinder. Due to the internal setup of cylindrical battery cells, heat generated within the battery cells is mainly transferred to the terminal regions of the battery cells, i.e. the first and the second base surface of the cylinder. By placing at least one of said first and second base surface of the cylindrical battery cells adjacent to the double-walled portion of the housing, the heat transfer from the battery cells into the first tempering fluid may be improved.

By arranging the cylindrical battery cells in a hexagonal packing arrangement, the space available within the housing may be optimally utilized. Further, the hexagonal packing arrangement may inherently limit the flow of the second tempering liquid between side surface of the cylindrical battery cells, thereby maximizing the flow of the second tempering liquid along the terminals of the battery cells, which, as described above, may improve the heat transfer into the firsts tempering liquid.

In an embodiment, the housing includes at least two double walled portions, including a first double-walled portion and a second double-walled portion opposing the first double-walled portion, the first base surfaces of the of battery cells are located adjacent to the first double-walled portion, and the second base surfaces of the battery cells are located adjacent to the second double-walled portion.

In other words, the cylindrical battery cells are aligned with each other, thereby forming a single layer of battery cells, which are located next to each other. The terminals of the battery cells are located at the two opposing base surfaces of the cylindrical shape. Thereby, each terminal of the plurality of battery cells is located adjacent to a wall of the housing, through with the flow of the first tempering liquid may be established.

With this arrangement, both of the terminals of the battery cells may be actively tempered with a flow of the first tempering liquid through channels formed in the adjacent double-walled portions of the housing. Thereby, an improved temperature control of the battery cells may be achieved, with an efficient transfer of heat into the first tempering liquid and improved temperature homogeneity across the plurality of battery cells.

In an embodiments, the battery module further comprises second flow restrictor components arranged between side surfaces of adjacent battery cells.

In other word, the second flow restrictor components may be arranged in between the aligned plurality of cylindrical battery cells. With this setup, the terminal portions of the plurality of battery cells are exposed, allowing for an increased flow of the second tempering liquid along the terminals of the battery cells.

The second flow restrictor components may be formed, for example, by a plastic, a synthetic material, or the like.

In an embodiment, each battery cell exhibits a flat shape, wherein a first terminal extends in a first direction and a second terminal extends in a second direction, each of the first direction and the second direction being perpendicular to a thickness direction of respective battery cell, the plurality of battery cells are stacked along the thickness direction with the first terminals extending in a same direction, and the first terminals are located adjacent to the double-walled portion.

For example, the battery cells may be pouch cells or prismatic cells.

Pouch cells consist of flexible, laminated layers that enclose cathode, anode and separator layers. These layers are coated with electrode materials and impregnated with an electrolyte. The electrolyte enables the transport of, for example, lithium ions between the electrodes during the charging and discharging process. This flexible design allows easy adaptation to different housing shapes. Increasingly, larger formats of pouch cells are also being used in traction batteries for vehicles, as the energy density and manufacturing costs are advantageous compared to other cell formats.

In contrast, prismatic cells have a rectangular, blocky shape and are housed in a solid metal casing. Inside the housing, the electrodes and separator layers are stacked and interconnected. This design may offers greater structural integrity.

The flat battery cells may be stacked in a thickness direction of the battery cells, thereby forming a battery stack. The first direction may be a direction perpendicular to the thickness direction of the battery cells. The second direction may be a direction perpendicular to the thickness direction of the battery cells. In other words, terminals of the battery cells may extend from a side surface of the battery cells.

Since the first terminals extend in a same direction and, further are located adjacent to the double-walled portion, heat transferred to terminal portions of the battery cells (due to the internal structure of flat battery cells) may be efficiently transferred to the first tempering liquid via the second tempering liquid and the housing. This may result in an improved cooling of the battery cells with optimized temperature homogeneity across the battery cells.

For example, the second direction is equal to the first direction, and the first terminals and the second terminal are located adjacent to the double-walled portion.

In other words, the first terminals and the second terminals may extend from the same side surface of the flat battery cells. It is to be noted that the first and second terminals may be located next to each other on the same side surface of the battery cell.

With this arrangement, each of the terminals of the battery cells may be efficiently tempered with an optimized temperature homogeneity across the battery cells.

However, the terminals may also extend in different direction, wherein only the first terminal of each battery cell is located adjacent to the double-walled portion of the housing.

For example, the first direction differs from the second direction, the housing includes at least two double walled portions, including a first double-walled portion and a second double-walled portion, the first terminals are located adjacent to the first double-walled portion, and the second terminals are located adjacent to the second double-walled portion.

In other words, the terminals of each battery cell may extend from different sider surfaces of the flat battery cells, wherein, however, the first terminals of each battery cell extend form a same side surface of respective battery cells and the second terminals of each battery cell extend from a same side surface (different from the side surface with the first terminal extending therefrom) of the plurality of battery cells. At least two walls of the housing may exhibit a channel for the flow of the first tempering liquid, wherein each of the first terminals are adjacent to a first wall including a channel and each of the second terminals are adjacent to a second wall including a channel.

With this setup, each of the terminals portions of the battery cells may be efficiently tempered with an improved temperature homogeneity, since each of the terminals is located next to a portion of the housing, which exhibits a double-walled shape including a channel for the flow of the first tempering liquid.

In an embodiment, the battery module further comprises one or more cell holders, each cell holder being formed as a rigid framework with a plurality of guide rails configured to accommodate one or more battery cells.

The cell holders may be formed by a synthetic material like a plastic or the like. The cell holders may be configured to hold one or more flat battery cells. For example, each battery cell may hold two, three, four, five or any other number of flat battery cells. The flat battery cells are held in the cell holders by the guide rails which are configured to accommodate the battery cells by holding respective battery cell in a side region of the battery cells.

With this setup, the positions of the plurality of flat battery cells may be accurately determined.

In an embodiment, the guide rails are spaced apart from each other by a predetermined distance.

In other words, the guide rails may be positioned on the cell holders such that respective flat battery cells, when accommodated by the cell holder, are spaced apart by a predetermined distance.

With this setup, the positions of the plurality of flat battery cells may be accurately determined.

In an embodiment, each cell holder comprises a U-formed first portion and a U-formed second portion, configured to accommodate the one or more battery cells therebetween.

With this setup, the battery cells may be inserted into the first portion or the second portion. Subsequently, the other portion may be placed on top of the first portion. Thereby, the battery cells are held in between the two portions of a cell holder.

In an embodiment, the first portion and the second portion are configured to interlock into each other when positioned in alignment.

For example, the first portion and/or the second portion may comprise a click mechanism, wherein a protruding portion of the first portion is inserted into a hold or the second portion. The click mechanism may involves the protruding portion, often referred to as a "male" part, being inserted into a corresponding hole or recess, typically termed a "female" part. Once inserted, the protruding portion engages with the female part, and a notch or similar feature secures the connection, preventing unintended separation. This notch acts as a locking mechanism, ensuring that the components remain securely attached until intentionally disengaged.

This setup may allow for an easy assembly of the battery cells within the cell holders.

In an embodiment, the battery module further comprises a mounting frame, comprising a first plate and a second plate connected to each other by at least one rod, wherein the mounting frame is configured to accommodate the one or more cell holders between the first plate and the second plate.

The mounting frame and, in particular, the first plate, the second plate, and the at least one rod may be formed by a material like a metal, which exhibits a suitable longitudinal strength. The first plate and the second plate may exhibit a predetermined thickness, thereby reducing bending of the plates due to stress caused by thermal expansion of the battery cells held between the plates. For example, the first plate and the second plate may be substantially rectangular with a hole located in each of the edge portions of the plates. The rods may extend through the holes and may be fastened using nuts arranged on threaded ends of the rods.

With this setup, the battery cells may be securely fixed in the frame structure, thereby preventing displacement of the battery cells due to thermal expansion of the cells. This may allow for an improved mechanical durability of the battery module.

The battery module further comprises a first pump configured to establish a flow of the first tempering liquid through the channel of the at least one double-walled portion; and a second pump configured to establish a flow of the second tempering liquid along the at least one terminal of each battery cell in a direction substantially opposite to a direction of the flow of the first tempering liquid.

The first pump may be located outside of the battery housing. For connection of the channel to the first pump, liquid feedthroughs may be provided in the battery housing. Further, there may be a heat dissipation element in between the first pump and the channel, configured to dissipate the heat of the first tempering liquid. For example, the heat dissipation element may be an external heat exchanger.

The second pump may be located outside of the housing, may be attached to the housing, may be included in the housing, or the like. The second pump is connected to the inside of the housing, in order to pump the second tempering liquid along the battery cells through the housing. For example, the second tempering fluid may enter the housing through a liquid feedthrough, flow along the battery cells (in particular the terminal portions thereof), and exit the housing at an opposing location through a second liquid feedthrough. Then, the second tempering liquid may be led to the pump via an external pipe or another channel formed in the housing. From the pump, the second tempering liquid may enter the housing again, thereby forming a closed loop.

In an embodiment, the second tempering liquid is in contact with each of the at least one terminals of the plurality of battery cells.

With this arrangement, the heat transfer from the battery cells to the second tempering liquid may be improved.

In an embodiment, each battery cell is electrically connected in parallel or series to one or more other battery cells.

In other words, the plurality of battery cells form a battery stack that provides a voltage according to the connection of the terminals of the battery cells. The specific connection of the battery cells may be configured according to application requirements.

In an embodiment, the battery module further comprises at least one electrical feedthrough connected to the plurality of battery cells.

The electrical feedthrough allows for electric connection of the battery stack, for instance, for charging or decharging.

In an embodiment, the housing comprises a profile housing with two open end sides, which are located opposite to each other along a main axis of the battery module; and a first end plate and a second end plate liquid-tightly closing the profile housing at the two open end sides.

Additional benefits and advantages of the invention will become apparent from the detailed description of an embodiment and the drawings.

### BRIEF DESCRIPTION OF THE DRAWINGS

- **Fig. 1**: is a conceptual illustration of tempering a battery module according to a comparative example;
- **Fig. 2**: is a conceptual illustration of tempering a battery module according to an embodiment;
- **Fig. 3a**: is a conceptual illustration of tempering a battery module according to an embodiment;
- **Fig. 3b**: is a conceptual illustration of tempering a battery module according to an embodiment;
- **Fig. 4a**: illustrates temperature profile of a tempering liquid in thermal contact with battery cells in an arrangement according to the comparative example and in an arrangement according to an embodiment;
- **Fig. 4b**: illustrates the temperature profile of a tempering liquid in thermal contact with battery cells in an arrangement according to an embodiment;
- **Figs. 5a and 5b**: are illustrations of a battery cell having a substantially flat shape;
- **Fig. 6a**: illustrates a U-shaped first portion of a cell holder;
- **Fig. 6b**: illustrates a U-shaped second portion of a cell holder;
- **Figs. 7a to 7c**: illustrate the stacking of a plurality of battery cells in a cell holder;
- **Figs. 8a and 8b**: illustrate the arrangement of a cell holder with a plurality of battery cells in a mounting frame;
- **Figs. 9a to 9c**: illustrate the arrangement of a plurality of cell holders, each with a plurality of battery cells in a mounting frame, and an electrical connection of the plurality of battery cells;
- **Figs 10a to 10c**: illustrate a housing of a battery module and an arrangement of a plurality of battery cells therein;
- **Figs 11a and 11b**: illustrate a sectional view of the housing and the arrangement of a plurality of battery cells therein;
- **Fig 12a**: is a sectional view of the housing and the arrangement of a plurality of cylindrical battery cells therein; and
- **Figs. 12b and 12c**: illustrate a plurality of cylindrical battery cells in a hexagonal packing arrangement with a plurality of flow restrictor components.

### DESCRIPTION OF PREFERRED EMBODIMENTS

In the following, preferred embodiments will be described in detail with reference to the drawings.

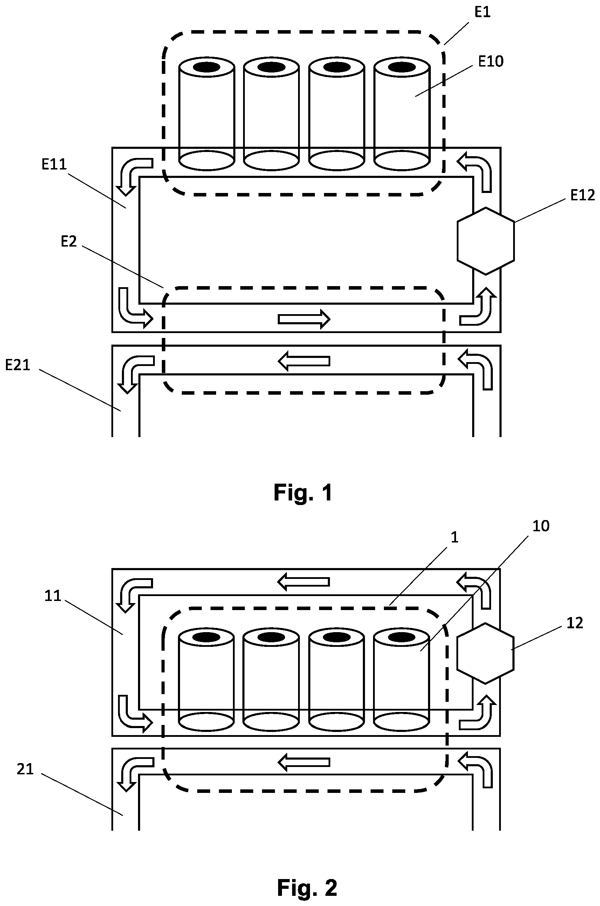

**Fig. 1** is a conceptual illustration of cooling a battery module according to a comparative example. In the comparative example, a plurality of battery cells E10 are arranged in alignment in a battery module E1. A pump E12 establishes a flow of a second tempering liquid E11 along base sides of the plurality of battery cells E10. Then, the second tempering liquid E11 enters an external heat exchanger E2, where heat is transferred from the second tempering liquid E11 to a first tempering liquid E21, which flows substantially in a direction opposite to the direction of the second tempering liquid E21 (counter-current principle). The direction of the flows of the first tempering liquid E21 and of the second tempering liquid E11 is indicated by arrows.

In the illustrated comparative example, the heat absorption by the second tempering liquid E11 is spatially and temporally separated from the heat transfer from the second tempering liquid E11 to the first tempering liquid E21. This has the effect that the temperature profile within the battery module E1 along the battery cells E10 exhibits a large difference between its maximum value and its minimum value. In other words, the temperature of the second tempering liquid E11 at the first battery cell E10 (in the direction of the flow of the second tempering liquid E12 within the battery module; i.e. the rightmost battery cell E10 in Fig. 1) is substantially lower than the temperature at the last battery cell E1 (in the direction of the flow of the second tempering liquid E12 within the battery module; i.e. the leftmost battery cell E10 in Fig. 1). This is due to the fact that the second tempering liquid E11 absorbs, on its way through the battery module E1, heat generated by the plurality of battery cells E10. Accordingly, the battery cells E10 are tempered using the first tempering liquid E11 that exhibits a temperature depending on the position within the battery module E1, resulting in different tempering efficiencies for the plurality of battery cells E10.

**Fig. 2** is a conceptual illustration of tempering a battery module according to an embodiment. The concept of the illustrated battery module 1 differs from the concept of the comparative example as illustrated in Fig. 1 in that the heat absorption by the second tempering liquid 11 is neither spatially not temporally separated from the process of heat transfer from the second tempering liquid 11 to the first tempering liquid 21. This is due to the arrangement of the plurality of battery cells 10 having at least one terminal located next to a double-walled portion of a battery module housing, through which a flow of the first tempering liquid is established.

That is, according to the setup as illustrated in Fig. 2, the second tempering liquid 11 flows within the battery module 1 along the terminals of the plurality of battery cells 10. The flow of the second tempering liquid 11 is established by a pump 12 that is connected to the battery module via two liquid feedthroughs, for example. Further, a flow of a first tempering liquid 21 is established through a double-walled portion of the battery module 1, wherein said double-walled portion is adjacent to at least one terminal of each battery cell 10 included in the module 1.

With this setup, an improved tempering of the battery cells 10 may be achieved, since the heat absorption by the second tempering liquid 10 is not separated from the transfer of the heat to the first tempering fluid 21. In other words, the battery cells 10 transfer heat to the second tempering liquid 11 at the same or substantially the same location the heat is transferred from the second tempering liquid to the first tempering liquid. This may reduce temperature inhomogeneities within the battery module 1, thereby improving the tempering efficiency throughout the battery module 1.

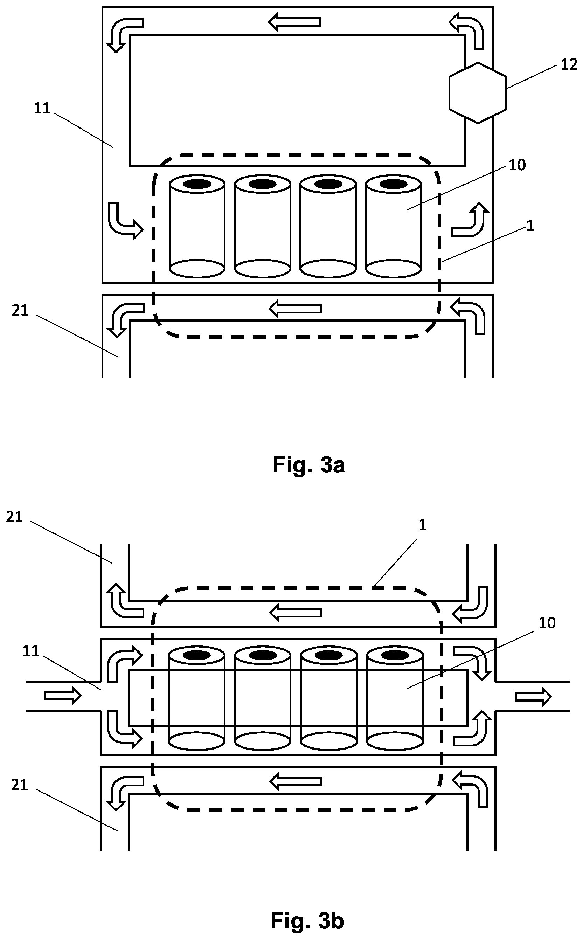

**Fig. 3a** is a conceptual illustration of tempering a battery module according to an embodiment. Similarly to the setup illustrated in Fig. 2, the heat absorption by the second tempering liquid 11 is not separated from the transfer of the heat to the first tempering liquid 21. However, the setup differs from the setup of Fig. 2 in that the flow of the second tempering liquid 11 within the battery module 1 is established along the entire battery cells 10. In other words, the second tempering liquid is in thermal contact with the entire surface of each battery cell 10. With this setup, as in the setup of Fig. 2, temperature inhomogeneities within the battery module 1 may be reduced, resulting in an improved tempering efficiency throughout the battery module 1.

**Fig. 3b** is a conceptual illustration of tempering a battery module according to an embodiment. Similarly to the setups illustrated in Figs. 2 and 3, the heat absorption by the second tempering liquid 11 is not separated from the transfer of the heat to the first tempering liquid 21. However, the setup differs from the setup of Fig. 2 in that the flow of the second tempering liquid 11 within the battery module 1 is established along both terminals of each battery cell 10. In other words, the second tempering liquid is in thermal contact each terminal of the battery cells 10. Specifically, two main flow directions are established within the battery module 1, along the first terminals and along the second terminals (which are located at an opposite position) of the battery cells 10. It is noted that the pump 12 is not illustrated in Fig. 3b, but may be used to establish the flow of the second tempering liquid 11. With this setup, as in the setups of Figs. 2 and 3, temperature inhomogeneities within the battery module 1 may be reduced, resulting in an improved tempering efficiency throughout the battery module 1.

In order to quantify the effect described above in connection with Figs. 2, 3a and 3b, a temperature profile along the battery cells within a battery module has been studied computationally for a setup of the comparative example as illustrated in Fig. 1 and a setup of an embodiment as illustrated in Fig. 3a. For this purpose, the heat power to be dissipated was set to 265 W, the volume flow of the second tempering liquid was set to 8 I/min, the volume flow of the first tempering liquid was set to 20 I/min, the heat capacity of the second tempering liquid (a dielectric liquid) was set to 2.2 kJ/(kg K), the heat capacity of the first tempering liquid (water-glycol mixture) was set to 3.8 kJ/(kg K), the density of the second tempering liquid was set to 0.785 kg/L at 40 °C, and the density of the first tempering liquid was set to 1.03 kg/l at 40 °C. The length of the heat exchanger was set to 0.43 m, the cross section of the wall in an axial direction was set to 150 mm², and the thermal conductivity of the wall was set to 215 W/(K m).

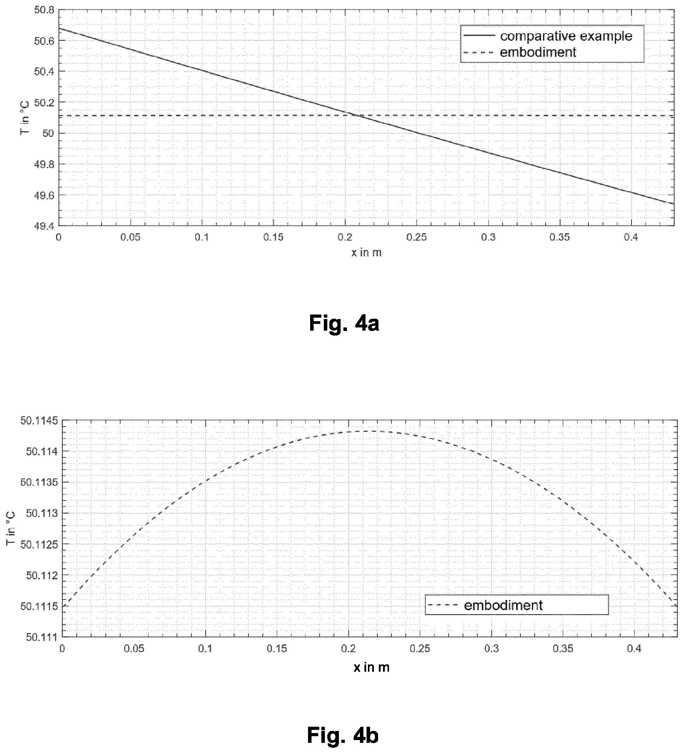

**Fig. 4a** illustrates temperature profile of a tempering liquid in thermal contact with battery cells in an arrangement according to the comparative example and in an arrangement according to an embodiment, namely the embodiment illustrated in Fig. 3a. **Fig. 4b** illustrates the temperature profile of a tempering liquid in thermal contact with battery cells in an arrangement according to the embodiment. As can be seen from the figured, the temperature profile of the comparative example exhibits a significant gradient with a maximum temperature substantially greater than a minimum temperature. On the other hand, the temperature profile of the embodiment exhibits such a low variation that it is barely visible in the illustration in Fig. 4a. However, the enlarged view of Fig. 4b shows a low variation of the temperature. Therefore, as shown by the results of the simulation, the setup according to the present disclosure provides an improved temperature homogeneity along the battery cells, resulting in an improved tempering efficiency of the battery cells.

### EMBODIMENT 1

In the following, a detailed embodiment of the present invention is described, wherein the plurality of battery cells are of a substantially flat shape and may be, for example, pouch battery cells or prismatic battery cells.

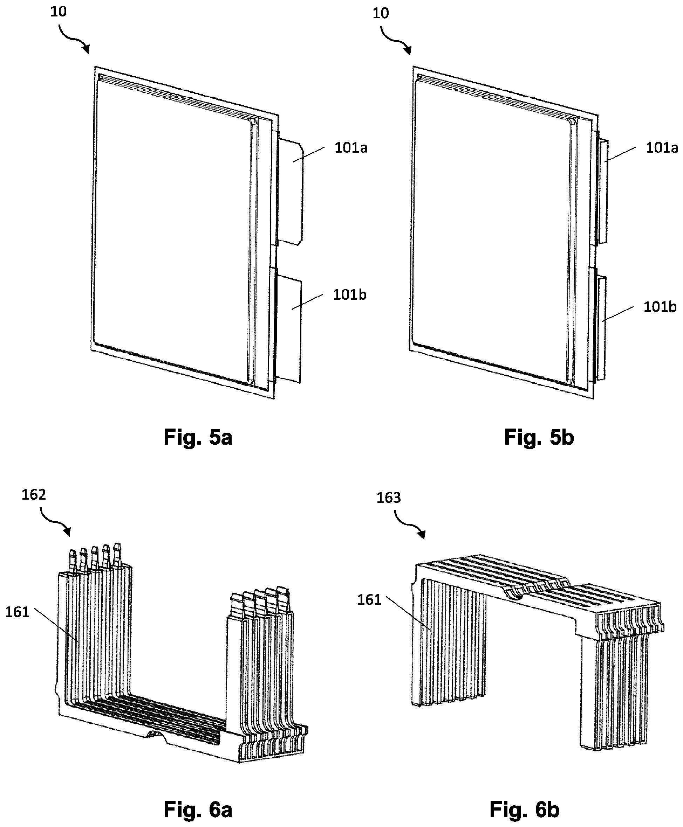

**Figs. 5a and 5b** are illustrations of a battery cell 10 having a substantially flat shape. The battery cell 10 exhibits a substantially flat rectangular shape with two terminals 101a, 101b extend along a first direction within the plane of the substantially flat shape. That is, the terminals 101a, 101b extend from a side surface of the battery cell 10 in a same direction, wherein the terminals 101a, 101b are located next to each other. The battery cell 10 is substantially rectangular in a length and a width direction and exhibits a thickness substantially lower than its width and length. In Fig. 5b, the terminals 101a, 101b are bent into a thickness direction of the battery cell 10, which facilitates electric connection of terminals 101a, 101b of a plurality of battery cells 10.

**Fig. 6a** illustrates a U-shaped first portion 162 of a cell holder 16. **Fig. 6b** illustrates a U-shaped second portion 163 of a cell holder 16. The cell holder is formed as a rigid framework with a plurality of guide rails 161 that are configured to accommodate one or more battery cells 10. The guide rails 161 are spaced apart from each other by a predetermined distance. Battery cells 10 may be inserted into the guide rails 161, resulting in the battery cells 10 being held in place, even when mechanical stress is applied, for instance due to thermal expansion of battery cells 10. The two U-shaped portions 162, 163 may engage with each other by a click mechanism. The click mechanism may comprise male and female portions positioned on the first portion 162 and second portion 163, respectively. The male portions slide into the female portions and engages therein by, for example, a notch.

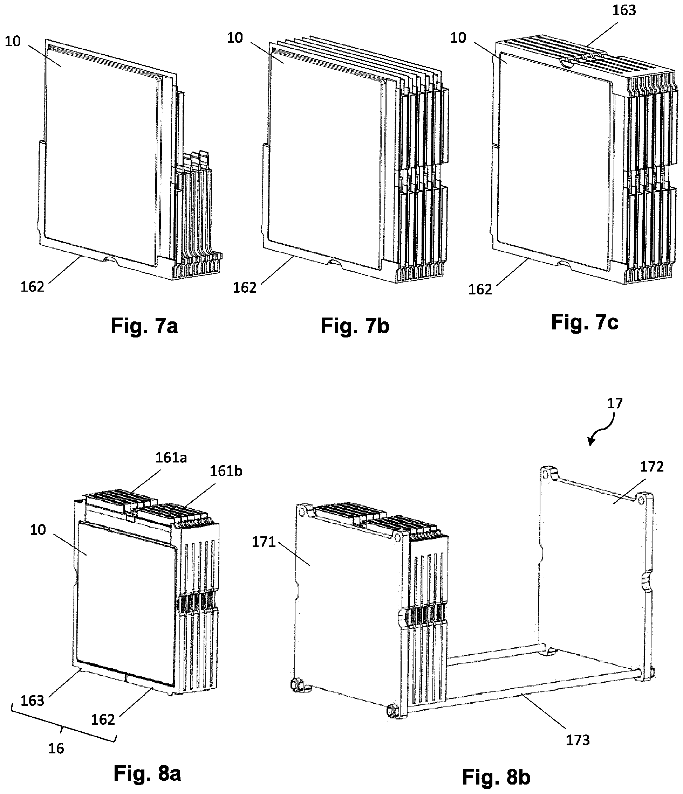

**Figs. 7a to 7c** illustrate the stacking of a plurality of battery cells 10 in a cell holder 16. Specifically, as illustrated in Fig. 7a, one battery cell 10 is inserted into the U-shaped first portion 162 of a cell holder. Fig. 7b illustrates the arrangement of a plurality of battery cells 10 in a U-shaped first portion 162 of the cell holder. Fig. 7c illustrates the arrangement of the plurality of battery cells 10 in the U-shaped first portion 162 of the cell holder 16, wherein the U-shaped second portion 163 of the cell holder 16 is installed and engaged with the U-shaped first portion 162 of the cell holder 16. Although in Figs. 7a to 7b, a cell holder for 16 six battery cells 10 is illustrated, the present disclosure is not limited thereto, and the cell holder 16 may be configured to accommodate two, three, four, five, or any other number of battery cells 10.

**Figs. 8a and 8b** illustrate the arrangement of a cell holder 16 with a plurality of battery cells 10 in a mounting frame 16. Fig. 8a substantially corresponds to the illustration of Fig. 7c, wherein, however, the cell holder 16 accommodating the battery cells 10 is shown rotated by 90 degrees. The mounting frame 17 comprises a first plate 171 and a second plate 172 connected to each other by at least one rod 173. The mounting frame 17 is configured to accommodate the one or more cell holders 16 between the first plate 171 and the second plate 172. In the illustration of Fig. 8b, only one cell holder 16 is inserted into the mounting frame 17, whose first and second plates 171 are connected by two rods 173. The rods 173 may be inserted into holes provided in the end plates. The rods 173 may exhibit threaded end portions, allowing for fixed attachment to the first and second plates 171, 172 using nuts. However, the present disclosure is not limited to this setup and a different mounting technique may be applied.

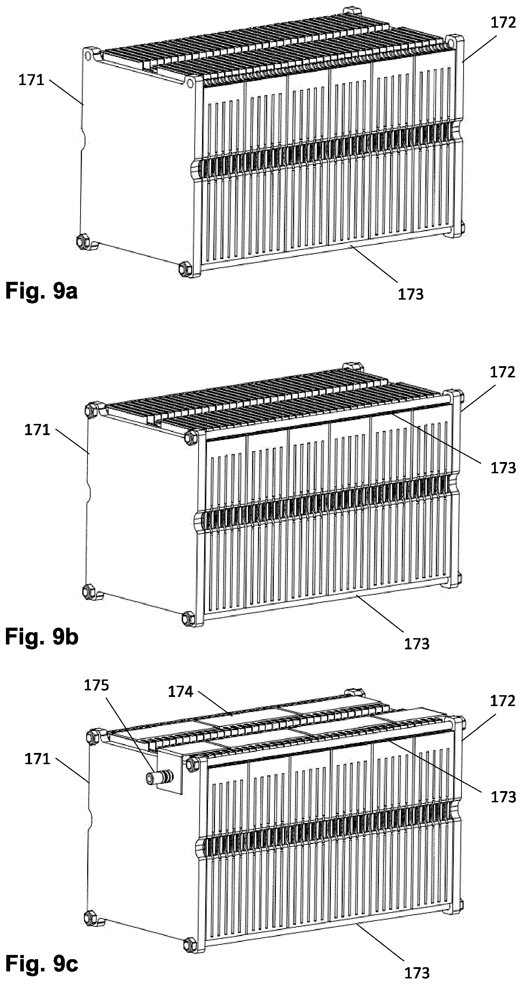

**Figs. 9a to 9c** illustrate the arrangement of a plurality of cell holders 16, each with a plurality of battery cells 10, in a mounting frame 17, and an electrical connection of the plurality of battery cells 10. Specifically, Fig. 9a illustrates the mounting frame 17 with six cell holders 16 inserter therein. However, the present disclosure is not limited thereto, and a different number of cell holders 16 may be inserted to the mounting frame. Fig. 9b illustrates the mounting frame 17 with cell holders 16 inserted therein and two upper rods 173 arranged between the first and the second plate 171, 172. Fig. 9c illustrates the setup as illustrated in Fig. 9b, wherein a plurality of electric connection plates 174 are attached to the terminals 101a, 101b of the plurality of battery cells 10. Sue to the bent portion of the terminals 101a, 101b, the plurality of electric connection plates 174 may be easily fixed to the terminals 101a, 101b. For example, the electric connection plates may be welded onto the terminals 101a, 101b. Although details of the electric connection of the terminals 101a, 101b are not illustrated in Fig. 9c, the skilled person is well aware that the terminals 101a, 101b of the plurality of battery cells 10 may be connected to connect the battery cells 10 in series, in parallel, or a combination thereof. For example multiple subsets of battery cells 10, the cells 10 may be connected in parallel, and the subsets of battery cells may be connected to each other in series. The specific connection configuration may be chosen in view of the type of battery cell, the intended use of the battery module, or the like. The battery cells 10 are connected to electrical feedthroughs 175, which serve as terminals for connection of the battery module 1.

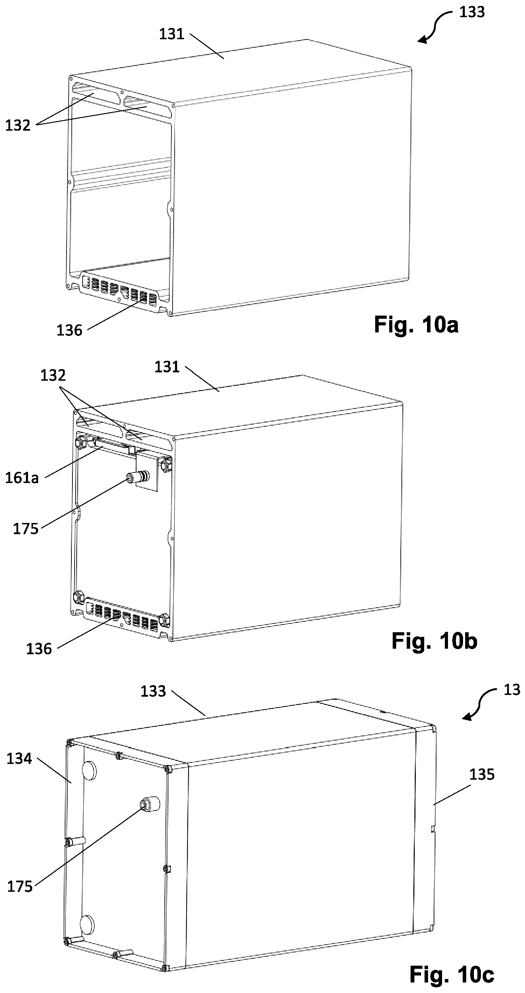

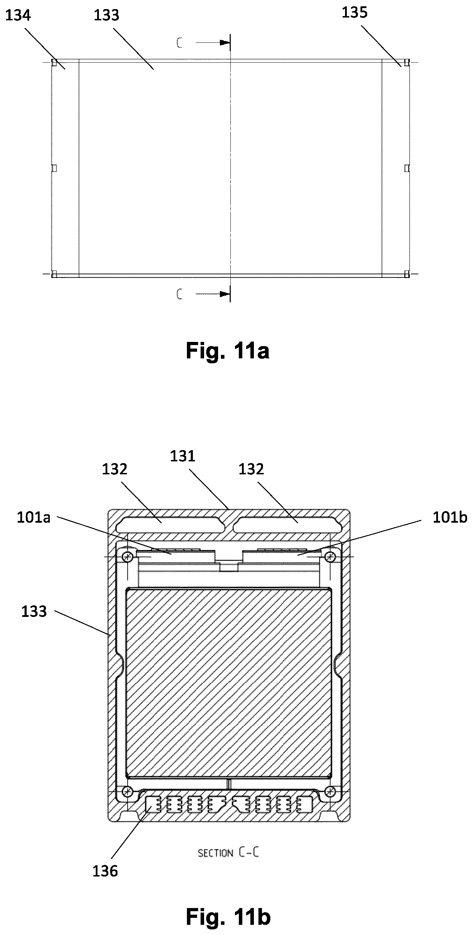

**Figs 10a to 10c** illustrate a housing 13 of a battery module 1 and an arrangement of a plurality of battery cells 10 therein. **Figs 11a and 11b** illustrate a sectional view of the housing 13 and the arrangement of a plurality of battery cells 10 therein.

The housing 13 comprises a profile housing 133 with two open end sides, which are located opposite to each other along a main axis of the battery module. Further, the housing comprises a first end plate 134 and a second end plate 135 liquid-tightly closing the profile housing 133 at the two open end sides. The first and second end plates 134, 135 may be, for example, attached to the profile housing 133 using a plurality of screws inserted to respective threaded screw holes provided on the profile housing 13, with a flat seal being located therebetween, in order to liquid-tightly closing the profile housing 13. The first and second end plates 134, 135 may comprise a hole for insertion of the electric terminal 175, which is sealed in order to provide a liquid-tight electrical feedthrough.

The housing 13 comprises one double-walled portion 131, wherein channels 132 for the flow of the first tempering liquid 21 are formed. However, the present disclosure is not limited thereto, and the housing may comprise two or more double-walled portions 131, each having at least one channel formed therein. Further, the housing 13 may exhibit liquid feedthroughs (not illustrated) for connection of the channels 132 with an external tempering system including a pump and an external heat exchanger, for example. Further, the housing 13 may exhibit further liquid feedthroughs (not illustrated) for connection of the interior of the housing 13 with a circulation system configured to establish the flow of the second tempering liquid 11 within the housing. For example, the first and second end plates 134, 135 may exhibit liquid feedthroughs at a position corresponding to the positions of the terminals 101a, 101b of the plurality of battery cells 10. The liquid feedthroughs may be connected (externally of the housing 13 for example) with each other via a pump configured to establish the flow of the second tempering liquid. Alternatively, the first and second end plates 134, 135 may include the pump and, further, a liquid channel connecting the interior of the housing 13 at a position of the first end plate 134 via a channel in the first end plate 134, a secondary channel 136 formed in a different portion of the housing 13, a channel in the second end plate 135, a pump, with the interior of the housing 13 at a position of the second end plate 135. Thereby, a flow of the second tempering liquid 11 may be established along the terminals 101a, 101b of the battery cells 10 with in the housing 13.

It is noted that, although not illustrated in Figs. 10a to 10c, the battery module may comprise first flow restrictor components arranged between the battery cells 10 and portions of the housing 13 other than the at least one double-walled portion. With this arrangement, the flow of the second tempering liquid 22 within the housing may be maximized along the terminals 101a, 101b of the plurality of battery cells 10, thereby increasing respective flow rate and improving the tempering of the battery cells 10. In the illustrated setup, the function of the first flow restrictor components is implemented by the mounting frame 17 and the cell holders 16. Said components are shaped and sized so as to reduce the space available for the second tempering liquid 12 in between the battery cells 10 and between the battery cells 10 and portions of the housing 13 different from the double-walled portion 131.

### EMBODIMENT 2

In the following, a detailed embodiment of the present invention is described, wherein the plurality of battery cells are of a cylindrical shape and may exhibit, for example, a terminal on each of the base surfaces of the cylindrical shape.

The present embodiment substantially corresponds to embodiment 1, wherein rather than flat battery cells like pouch or prismatic cells, cylindrical battery cells are included in the battery housing. Therefore, repetitive descriptions of components that are substantially the same as in the first embodiment are omitted.

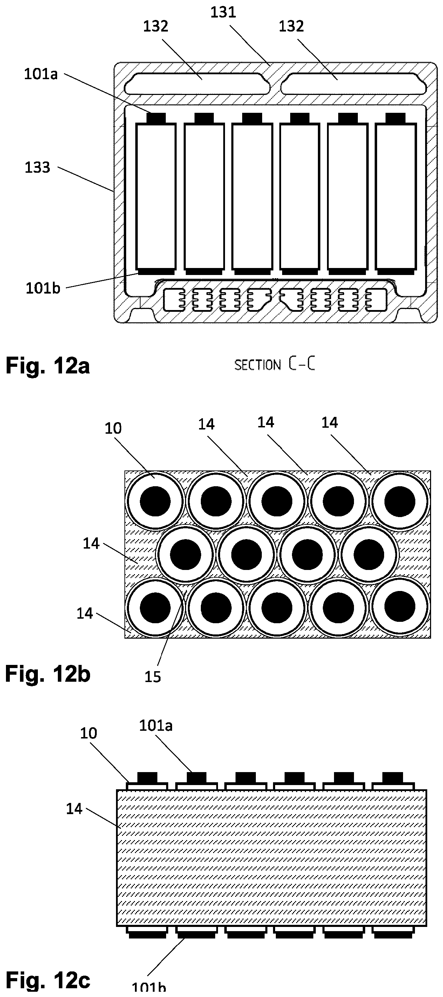

**Fig 12a** is a sectional view of the housing 13 and the arrangement of a plurality of cylindrical battery cells 10 therein. The cylindrical battery cells 10 exhibit a substantially cylindrical shape, wherein a first terminal 101a is located on first base surface of the cylindrical shape and a second terminal 101b is located on a second base surface opposite to the first base surface of the cylindrical shape. The battery cells 10 are aligned with each other such that the plurality of battery cells exhibit substantially the same orientation. The plurality of battery cells 10 form a single layer of battery cells 10, wherein first terminals 101a are located adjacent to a double-walled portion 131 of the housing 13. Said double-walled portion 131 comprises two channels 132 for the flow of the first tempering liquid. Although not illustrated in Fig. 12a, the terminals 101a, 101b of the plurality of battery cells 10 may be connected with each other by respective connection members, such that the plurality of battery cells 10 are connected to each other in parallel and/or series. Further, electrical feedthroughs may be provided as terminals for connection of the battery module.

In the illustrated example, first terminals 101a are located adjacent to the double-walled portion 131 of the housing 13 comprising the channels 132 for the flow of the first tempering liquid. On the other hand, the second terminals 131b are located not adjacent to a double-walled portion of the housing 13. However, the present disclosure is not limited thereto, and the portion of the housing adjacent to the second terminals 101b may be a double-walled portion of the housing 13 exhibiting at least one channel for the flow of the first tempering liquid.

**Figs. 12b and 12c** illustrate a plurality of cylindrical battery cells 10 in a hexagonal packing arrangement with a plurality of flow restrictor components 14, 15. Fist flow restrictor components 14 are located between the battery cells 10 and portions of the housing 13 different from the double-walled portion 131 of the housing 13. Second flow resistor components 15 are located between the plurality of battery cells 10. The flow restrictor components 14, 15 limit the flow of the second tempering liquid 11 within the housing in the vicinity of side surfaces of the battery cells 10 and between the battery cells 10 and portions of the housing 13 that do not contribute to heat exchange between the first tempering liquid 21 and the second tempering liquid 11. That is, the flow of the second tempering liquid 11 is maximized and optimized along the terminals 101a, 101b of the battery cells 10. Since the heat generated in battery cells 10 is transferred mainly to the terminal portions thereof, this facilitates for efficient tempering of the battery cells.

Fig. 12c shows, in a simplified illustration viewed from a side of the battery cells 10, that the terminal portions of the plurality of battery cells 10 are exposed, i.e. not covered by the flow restrictor components. Although a flow restrictor component 14 is illustrated in Fig. 12c as a single component, a plurality of first flow restrictor components 14 ma be provided. The flow restrictor components 14, 15 are shaped so as to fill spaced between side surfaces of the battery cells 10 and portions of the housing 13 different from the double-walled portion and to fill spaces between side surfaces of adjacent battery cells 13, wherein terminal portions of the battery cells 10 are exposed, to allow for the flow of the second tempering liquid 11.

### FURTHER ASPECTS

The battery module 1 may, in addition to the components described above, comprise one or more temperature sensors attached to a battery cell 10, a cell holder 16, an inner surface of the housing 13 or the like, and respective temperature sensing lines for providing temperature sensor signals to an outside of the battery module 1. The battery module 1 may further comprise one or more voltage sensing lines connected, for instance, to a connection bar or a connection sheet for providing a voltage signal to a voltage sensor outside of the battery module 1. Further, the battery module 1 may comprise one or more current-limiting elements like fuses. The battery module 1 may further comprise a controller like a microprocessor connected to the pump. The controller may receive voltage signals from the voltage sensor and/or temperature signals from the temperature sensors. Based on the temperature and/or voltage signals and, for instance, respective set points, the controller controls operation of the pump.

A battery system according to an embodiment comprises at least one battery module 1 as described above and a secondary tempering system connected to the ports of the battery modules 1. The tempering system comprises, for instance, a pump, a heat exchanger and fluid pipes for establishing a flow of the first tempering fluid (e.g. a first tempering liquid). For instance, the tempering system may be connected to a plurality of battery modules 1. For example, the first tempering fluid may flow through the plurality of battery modules 1 in a parallel or serial manner. The heat exchanger of the tempering system may be configured to exchange heat between the first tempering fluid and a heat sink and/or a heat source. The heat sink or source may be, for instance, ambient air. Further, the tempering system may comprise an electrical heater configured to heat the second tempering fluid in order to allow for temperature control of each of the battery modules 1.

Summarizing, provided is a battery module as defined in claim 1, comprising a housing including at least one double-walled portion, wherein a channel is integrally formed for a flow of a first tempering liquid; a second tempering liquid included in the housing; and a plurality of battery cells included in the housing and arranged in alignment with each other, wherein at least one terminal of each battery cell is located adjacent to the at least one double walled portion.

## Claims

1. A battery module, comprising
a housing (13) including at least one double-walled portion (131), wherein a channel (132) is integrally formed for a flow of a first tempering liquid (21);
a second tempering liquid (11) included in the housing (13);
a plurality of battery cells (10) included in the housing (13) and arranged in alignment with each other, wherein the orientation of the plurality of battery cells is substantially the same for the plurality of battery cells; and
a first pump configured to establish a flow of the first tempering liquid (21) through the channel (132) of the at least one double-walled portion (131);
**characterized by**
the housing (13) being configured for heat exchange between the plurality of battery cells (10) and the first tempering liquid (21) via the second tempering liquid (11) and the at least one double-walled portion (131);
at least one terminal (101a, 101b) of each battery cell (10) being located adjacent to the at least one double walled portion (131); and
a second pump (14) configured to establish a flow of the second tempering liquid (11) along the at least one terminal (101a, 101b) of each battery cell (10) in a direction substantially opposite to a direction of the flow of the first tempering (21) liquid.

2. The battery module according to claim 1, further comprising
first flow restrictor components (14) arranged between the battery cells (10) and portions of the housing (13) other than the at least one double-walled portion (131).

3. The battery module according to claim 1 or 2, wherein
each battery cell (10) exhibits a cylindrical shape, wherein a terminal (101) is located at each of a first base surface and a second base surface,
the plurality of battery cells (10) are arranged in a hexagonal packing arrangement, and
the first base surfaces of the battery cells (10) are located adjacent to the at least one double-walled portion (131).

4. The battery module according to claim 3, wherein
the housing (13) includes at least two double walled portions (131), including a first double-walled portion and a second double-walled portion opposing the first double-walled portion,
the first base surfaces of the of battery cells (10) are located adjacent to the first double-walled portion, and
the second base surfaces of the battery cells (10) are located adjacent to the second double-walled portion.

5. The battery module according to claims 3 or 4, further comprising
second flow restrictor components (15) arranged between side surfaces of adjacent battery cells (10).

6. The battery module according to claim 1 or 2, wherein
each battery cell (10) exhibits a flat shape, wherein a first terminal (101a) extends in a first direction and a second terminal (101b) extends in a second direction, each of the first direction and the second direction being perpendicular to a thickness direction of respective battery cell (10),
the plurality of battery cells (10) are stacked along the thickness direction with the first terminals (101a) extending in a same direction, and
the first terminals (101a) are located adjacent to the double-walled portion (131).

7. The battery module according to claim 6, wherein
the second direction is equal to the first direction, and
the first terminals (101a) and the second terminal (101b) are located adjacent to the double-walled portion (131).

8. The battery module according to claim 6, wherein
the first direction differs from the second direction,
the housing (13) includes at least two double walled portions (131), including a first double-walled portion and a second double-walled portion,
the first terminals (101a) are located adjacent to the first double-walled portion, and
the second terminals (101b) are located adjacent to the second double-walled portion

9. The battery module according to any one of claims 6 to 8, further comprising
one or more cell holders (16), each cell holder being formed as a rigid framework with a plurality of guide rails (161) configured to accommodate one or more battery cells (10).

10. The battery module according to claim 9, wherein
the guide rails (161) are spaced apart from each other by a predetermined distance.

11. The battery module according to claim 9 or 10, wherein
each cell holder (16) comprises a U-shaped first portion (162) and a U-shaped second portion (163), configured to accommodate the one or more battery (10) cells therebetween.

12. The battery module according to claim 11, wherein
the first portion (161) and the second portion (162) are configured to interlock into each other when positioned in alignment.

13. The battery module according to any one of claims 9 to 12, comprising
a mounting frame (17), comprising a first plate (171) and a second plate (172) connected to each other by at least one rod (173), wherein the mounting frame (17) is configured to accommodate the one or more cell holders (16) between the first plate (171) and the second plate (172).

14. The battery module according to any one of claims 1 to 13, wherein
the second tempering liquid (11) is in contact with each of the at least one terminals (101a, 101b) of the plurality of battery cells (10).

15. The battery module according to any one of claims 1 to 14, wherein
the housing (13) comprises
a profile housing (133) with two open end sides, which are located opposite to each other along a main axis of the battery module; and
a first end plate (134) and a second end plate (135) liquid-tightly closing the profile housing (133) at the two open end sides.

## Patentansprüche

1. Batteriemodul, umfassend
ein Gehäuse (13), das mindestens einen doppelwandigen Anschnitt (131) enthält, wobei ein Kanal (132) integral gebildet ist für einen Fluss einer ersten Temperierflüssigkeit (21);
eine zweite Temperierflüssigkeit (11), die in dem Gehäuse (13) enthalten ist;
eine Mehrzahl von Batteriezellen (10), die in dem Gehäuse (13) enthalten sind und in Ausrichtung zueinander angeordnet sind, wobei die Orientierung der Mehrzahl von Batteriezellen für die Mehrzahl von Batteriezellen im Wesentlichen dieselbe ist; und
eine erste Pumpe, die eingerichtet ist, einen Fluss der ersten Temperierflüssigkeit (21) durch den Kanal (132) des mindestens einen doppelwandigen Abschnitts (131) zu erzeugen;
**gekennzeichnet durch**
das Gehäuse (13), das für Wärmeaustausch zwischen der Mehrzahl von Batteriezellen (10) und der ersten Temperierflüssigkeit (21) über die zweite Temperierflüssigkeit (11) und den mindestens einen doppelwandigen Abschnitt (131) eingerichtet ist;
mindestens einen Anschluss (101a, 101b) jeder Batteriezelle (10), der sich benachbart zu dem mindestens einen doppelwandigen Abschnitt (131) befindet; und
eine zweite Pumpe (14), die eingerichtet ist, einen Fluss der zweiten Temperierflüssigkeit (11) entlang des mindestens einen Anschlusses (101a, 101b) jeder Batteriezelle (10) in einer Richtung zu erzeugen, die im Wesentlichen entgegengesetzt zu einer Richtung des Flusses der ersten Temperierflüssigkeit (21) ist.

2. Batteriemodul nach Anspruch 1, ferner umfassend
erste Flussbeschränkungskomponenten (14), die zwischen den Batteriezellen (10) und anderen Abschnitten des Gehäuses (13) als dem mindestens einen doppelwandigen Abschnitt (131) angeordnet sind.

3. Batteriemodul nach Anspruch 1 oder 2, wobei
jede Batteriezelle (10) eine zylindrische Form aufweist, wobei sich ein Anschluss (101) an jeder einer ersten Basisoberfläche und einer zweiten Basisoberfläche befindet,
die Mehrzahl von Batteriezellen (10) in einer hexagonalen Packungsanordnung angeordnet sind, und
die ersten Basisoberflächen der Batteriezellen (10) sich benachbart zu dem mindestens einen doppelwandigen Abschnitt (131) befinden.

4. Batteriemodul nach Anspruch 3, wobei
das Gehäuse (13) mindestens zwei doppelwandige Abschnitte (131) enthält, die einen ersten doppelwandigen Abschnitt und einen zweiten doppelwandigen Abschnitt gegenüber dem ersten doppelwandigen Abschnitt enthalten,
die ersten Basisoberflächen der Batteriezellen (10) sich benachbart zu dem ersten doppelwandigen Abschnitt befinden, und
die zweiten Basisoberflächen der Batteriezellen (10) sich benachbart zu dem zweiten doppelwandigen Abschnitt befinden.

5. Batteriemodul nach Anspruch 3 oder 4, ferner umfassend
zweite Flussbeschränkungskomponenten (15), die zwischen Seitenoberflächen benachbarter Batteriezellen (10) angeordnet sind.

6. Batteriemodul nach Anspruch 1 oder 2, wobei
jede Batteriezelle (10) eine flache Form aufweist, wobei ein erster Anschluss (101a) sich in einer ersten Richtung erstreckt und ein zweiter Anschluss (101b) sich in einer zweiten Richtung erstreckt, wobei jede der ersten Richtung und der zweiten Richtung senkrecht zu einer Dickenrichtung jeweiliger Batteriezelle (10) ist,
die Mehrzahl von Batteriezellen (10) entlang der Dickenrichtung gestapelt sind, wobei sich die ersten Anschlüsse (101a) in einer gleichen Richtung erstrecken, und
die ersten Anschlüsse (101a) sich benachbart zu dem doppelwandigen Abschnitt (131) befinden.

7. Batteriemodul nach Anspruch 6, wobei
die zweite Richtung gleich der ersten Richtung ist, und
die ersten Anschlüsse (101a) und die zweiten Anschlüsse (101b) sich benachbart zu dem doppelwandigen Abschnitt (131) befinden.

8. Batteriemodul nach Anspruch 6, wobei
die erste Richtung sich von der zweiten Richtung unterscheidet,
das Gehäuse (13) mindestens zwei doppelwandige Abschnitte (131) enthält, die einen ersten doppelwandigen Abschnitt und einen zweiten doppelwandigen Abschnitt enthalten,
die ersten Anschüsse (101a) sich benachbart zu dem ersten doppelwandigen Abschnitt befinden, und
die zweiten Anschlüsse (101b) sich benachbart zu dem zweiten doppelwandigen Abschnitt befinden.

9. Batteriemodul nach einem der Ansprüche 6 bis 8, ferner umfassend
einen oder mehrere Zellenhalter (16), wobei jeder Zellenhalter als ein starres Gerüst mit einer Mehrzahl von Führungsschienen (161) gebildet ist, die eigerichtet sind, eine oder mehrere Batteriezellen (10) aufzunehmen.

10. Batteriemodul nach Anspruch 9, wobei
die Führungsschienen (161) voneinander mit einem vorbestimmten Abstand beabstandet sind.

11. Batteriemodul nach Anspruch 9 oder 10, wobei
jeder Zellenhalter (16) einen U-förmigen ersten Abschnitt (162) und einen U-förmigen zweiten Abschnitt (163) umfasst, die eingerichtet sind, die eine oder die mehreren Batteriezellen (10) dazwischen aufzunehmen.

12. Batteriemodul nach Anspruch 11, wobei
der erste Abschnitt (161) und der zweite Abschnitt (162) eingerichtet sind, ineinander zu greifen, wenn sie in Ausrichtung angeordnet sind.

13. Batteriemodul nach einem der Ansprüche 9 bis 12, umfassend
einen Montagerahmen (17), der eine erste Platte (171) und eine zweite Platte (172) umfasst, die miteinander über mindestens eine Stange (173) verbunden sind, wobei der Montagerahmen (17) eingerichtet ist, den einen oder die mehreren Zellenhalter (16) zwischen der ersten Plate (171) und der zweiten Platte (172) aufzunehmen.

14. Batteriemodul nach einem der Ansprüche 1 bis 13, wobei
die zweite Temperierflüssigkeit (11) in Kontakt mit jedem der mindestens einen Anschlüsse (101a, 101b) der Mehrzahl von Batteriezellen (10) steht.

15. Batteriemodule nach einem der Ansprüche 1 bis 14, wobei
das Gehäuse (13) umfasst
ein Profilgehäuse (133) mit zwei offenen Endseiten, die sich entlang einer Hauptachse des Batteriemoduls gegenüberliegen; und
eine erste Endplatte (134) und eine zweite Endplatte (135), die das Profilgehäuse (133) an den zwei offenen Endseiten flüssigkeitsdicht schließen.

## Revendications

1. Module de batterie, comprenant
un boîtier (13) comportant au moins une portion à double paroi (131), dans lequel un canal (132) est formé de manière intégrée pour un écoulement d'un premier liquide de trempe (21) ;
un second liquide de trempe (11) contenu dans le boîtier (13) ;
une pluralité de cellules de batterie (10) contenues dans le boîtier (13) et disposées en alignement les unes avec les autres, dans lequel l'orientation de la pluralité de cellules de batterie est sensiblement la même pour la pluralité de cellules de batterie ; et
une première pompe configurée pour établir un écoulement du premier liquide de trempe (21) à travers le canal (132) de ladite au moins une portion à double paroi (131) ;
**caractérisé par**
le boîtier (13) qui est configuré pour un échange de chaleur entre la pluralité de cellules de batterie (10) et le premier liquide de trempe (21) via le second liquide de trempe (11) et ladite au moins une portion à double paroi (131) ;
au moins une borne (101a, 101b) de chaque cellule de batterie (10) qui est située à proximité adjacente de ladite au moins une portion à double paroi (131) ; et
une seconde pompe (14) configurée pour établir un écoulement du second liquide de trempe (11) le long de ladite au moins une borne (101a, 101b) de chaque cellule de batterie (10) dans une direction sensiblement opposée à une direction de l'écoulement du premier liquide de trempe (21).

2. Module de batterie selon la revendication 1, comprenant en outre des premiers composants de restriction d'écoulement (14) disposés entre les cellules de batterie (10) et des portions du boîtier (13) autres que ladite au moins une portion à double paroi (131).

3. Module de batterie selon la revendication 1 ou 2, dans lequel
chaque cellule de batterie (10) présente une forme cylindrique, dans lequel une borne (101) est située au niveau de chacune d'une première surface de base et d'une seconde surface de base,
la pluralité de cellules de batterie (10) sont disposées selon un agencement de remplissage hexagonal, et
les premières surfaces de base des cellules de batterie (10) sont situées à proximité adjacente de ladite au moins une portion à double paroi (131).

4. Module de batterie selon la revendication 3, dans lequel
le boîtier (13) comporte au moins deux portions à double paroi (131), comportant une première portion à double paroi et une seconde portion à double paroi opposée à la première portion à double paroi,
les premières surfaces de base des cellules de batterie (10) sont situées à proximité adjacente de la première portion à double paroi, et
les secondes surfaces de base des cellules de batterie (10) sont situées à proximité adjacente de la seconde portion à double paroi.

5. Module de batterie selon les revendications 3 ou 4, comprenant en outre
des seconds composants de restriction d'écoulement (15) disposés entre des surfaces latérales de cellules de batterie (10) adjacentes.

6. Module de batterie selon la revendication 1 ou 2, dans lequel
chaque cellule de batterie (10) présente une forme plate, dans lequel une première borne (101a) s'étend dans une première direction et une seconde borne (101b) s'étend dans une seconde direction, chacune de la première direction et de la seconde direction étant perpendiculaire à une direction d'épaisseur de la cellule de batterie (10) respective,
la pluralité de cellules de batterie (10) sont empilées le long de la direction d'épaisseur, les premières bornes (101a) s'étendant dans une même direction, et
les premières bornes (101a) sont situées à proximité adjacente de la portion à double paroi (131).

7. Module de batterie selon la revendication 6, dans lequel
la seconde direction est égale à la première direction, et
les premières bornes (101a) et la seconde borne (101b) sont situées à proximité adjacente de la portion à double paroi (131).

8. Module de batterie selon la revendication 6, dans lequel
la première direction diffère de la seconde direction,
le boîtier (13) comporte au moins deux portions à double paroi (131), comportant une première portion à double paroi et une seconde portion à double paroi,
les premières bornes (101a) sont situées à proximité adjacente de la première portion à double paroi, et
les secondes bornes (101b) sont situées à proximité adjacente de la seconde portion à double paroi.

9. Module de batterie selon l'une quelconque des revendications 6 à 8, comprenant en outre
un ou plusieurs supports de cellule (16), chaque support de cellule étant formé comme une ossature rigide ayant une pluralité de rails de guidage (161) configurés pour héberger une ou plusieurs cellules de batterie (10).

10. Module de batterie selon la revendication 9, dans lequel
les rails de guidage (161) sont espacés les uns des autres d'une distance prédéterminée.

11. Module de batterie selon la revendication 9 ou 10, dans lequel
chaque support de cellule (16) comprend une première portion en forme de U (162) et une seconde portion en forme de U (163), configurées pour héberger les une ou plusieurs cellules de batterie (10) entre celles-ci.

12. Module de batterie selon la revendication 11, dans lequel
la première portion (161) et la seconde portion (162) sont configurées pour s'imbriquer l'une dans l'autre lorsqu'elles sont positionnées de manière alignée.

13. Module de batterie selon l'une quelconque des revendications 9 à 12, comprenant un cadre de montage (17), comprenant une première plaque (171) et une seconde plaque (172), reliées l'une à l'autre par au moins une tige (173), dans lequel le cadre de montage (17) est configuré pour héberger les un ou plusieurs supports de cellule (16) entre la première plaque (171) et la seconde plaque (172).

14. Module de batterie selon l'une quelconque des revendications 1 à 13, dans lequel le second liquide de trempe (11) est en contact avec chacune de ladite au moins une borne (101a, 101b) de la pluralité de cellules de batterie (10).

15. Module de batterie selon l'une quelconque des revendications 1 à 14, dans lequel le boîtier (13) comprend
un boîtier profilé (133) avec deux côtés d'extrémité ouverts, qui sont situés à l'opposé l'un de l'autre le long d'un axe principal du module de batterie ; et
une première plaque d'extrémité (134) et une seconde plaque d'extrémité (135) fermant de façon hermétique aux liquides le boîtier profilé (133) au niveau des deux côtés d'extrémité ouverts.
